**Europäisches Patentamt**

**European Patent Office**

**Office européen des brevets**

(11) Veröffentlichungsnummer: **0 121 717**
A2

(12) # EUROPÄISCHE PATENTANMELDUNG

(21) Anmeldenummer: **84102016.7**

(22) Anmeldetag: **27.02.84**

(51) Int. Cl.³: **A 01 K 9/00**

(30) Priorität: **06.04.83 DE 3312366**

(43) Veröffentlichungstag der Anmeldung: **17.10.84**
**Patentblatt 84/42**

(84) Benannte Vertragsstaaten: **AT BE CH DE FR GB IT LI NL SE**

(71) Anmelder: **Förster, Martin, Dipl.-Ing., Gerwigstrasse 27, D-7707 Engen (DE)**

(72) Erfinder: **Förster, Martin, Dipl.-Ing., Gerwigstrasse 27, D-7707 Engen (DE)**
Erfinder: **Theys, Jos, Dipl.-Metzger, Havenstraat 15, B-3500 Hasselt (BE)**

(74) Vertreter: **Engelhardt, Guido, Dipl.-Ing., Montafonstrasse 35 Postfach 1350, D-7990 Friedrichshafen 1 (DE)**

(54) **Tränkeautomat für Säugetiere.**

(57) Bei einem Tränkeautomaten (1), in dessen Mixer (3) zur Zubereitung eines flüssigen Futtermittels dosiert zugegebenes Pulver und erwärmtes Wasser miteinander vermischt werden, ist dem Mixer (3) das erwärmte Wasser aus einem Boiler (5) mit einer dem Auslösungsvermögen des Pulvers entsprechenden Temperatur von ca. 60–70 °C in einer gegenüber der aufzubereitenden Futtermittelkonzentration reduzierten Menge zuführbar. Außerdem sind dem Mixer (3) eine oder mehrere wechselweise einschaltbare und jeweils über eine Saugleitung (19) mit einer Saugstelle (11) verbundene Mischvorrichtungen (21) nachgeschaltet, in denen durch Zugabe von Wasser das in dem Tränkeautomaten (1) aufbereitete Futtermittel auf eine trinkfertige Temperatur von ca. 40 °C abkühlbar und/oder auf die jeweilige Konzentration einstellbar ist.

Auf diese Weise ist es möglich, pulverförmiges Futtermittel in einem auf 60–70 °C erhitzten, dem Auflösungsvermögen des Pulvers entsprechenden Wassers vollständig und in kurzer Zeit aufzulösen, den Tieren aber das flüssige Futtermittel in einer trinkbaren Temperatur von ca. 40 °C zur Verfügung zu stellen.

## DIPL.-ING. GUIDO ENGELHARDT PATENTANWALT

**7990 Friedrichshafen**

Martin Förster
77o7 Engen

## Tränkeautomat für Säugetiere

Die Erfindung bezieht sich auf einen Tränkeautomat für Säugetiere, der aus einem Mixer zur Zubereitung eines flüssigen Futtermittels, beispielsweise von Milch, das in diesem aus einem aufgesetzten Behälter dosiert zugeführten Pulver und erwärmten Wasser gemischt wird und einer Saugstelle zuführbar ist, besteht und insbesondere bei der Kälbermast in vorteilhafter Weise verwendbar ist.

Derartige Tränkeautomaten, die seit einiger Zeit in der Tierfütterung eingesetzt werden, haben sich in der Praxis bewährt. Die Zubereitung von erwärmter Trinkmilch ist aber oftmals mit Schwierigkeiten verbunden, da das Milchpulver in dem auf höchstens 4o bis $43^{\circ}$C erwärmten Wasser, das den Tieren gerade noch, ohne daß diese gesundheitlich gefährdet sind, verabreicht werden kann, nur langsam lösbar ist. Eine längere Verweilzeit,innerhalb der eine vollständige Auflösung des Pulvers zu gewährleisten wäre, ist jedoch nicht vorgesehen, vielmehr können die Tiere während und

./.

unmittelbar nach dem Anrühren des Futtermittels dieses sofort absaugen. Eine zufriedenstellende Auflösung des Milchpulvers ist somit vielfach nicht möglich, die Tiere nehmen somit ungelöste Milch zu sich, so daß eine optimale Fütterung mitunter nicht gegeben ist.

Aufgabe der Erfindung ist es daher, einen Tränkeautomat für Säugetiere zu schaffen, mittels dem es stets möglich ist, Milchpulver vollständig in heißem Wasser, dessen Temperatur dem Lösungsvermögen des Pulvers entspricht, aufzulösen, den Tieren soll aber dennoch das aufbereitete Futtermittel in einer trinkbaren Temperatur zur Verfügung stehen. Eine unvollständige Auflösung des Milchpulvers soll somit ausgeschlossen sein, auch sollen die Tiere kein unzureichend aufbereitetes Futtermittel aufnehmen können.

Gemäß der Erfindung wird dies bei einem Tränkeautomaten der vorgenannten Gattung dadurch erreicht, daß dem Mixer des Tränkeautomaten das erwärmte Wasser aus einem Boiler, einem Durchlauferhitzer, einer thermisch regelbaren Mischbatterie od.dgl. mit einer dem Auflösungsvermögen des Pulvers entsprechenden Temperatur von ca. 6o - 7o$^{\circ}$C in einer gegenüber der aufzubereitenden Futtermittelkonzentration reduzierten Menge zuführbar ist und daß dem Mixer des Tränkeautomaten eine oder mehrere wechselweise einschaltbare und jeweils über eine Saugleitung mit einer Saugstelle verbundenen Mischvorrichtungen nachgeschaltet sind, in denen durch Zugabe von Wasser das in dem Tränkeautomaten aufbereitete Futtermittel auf eine trinkfertige Temperatur von ca. 4o$^{\circ}$C abkühlbar und/oder auf die jeweilige Konzentration einstellbar ist.

Die Mischvorrichtungen können hierbei in einfacher Ausgestaltung jeweils aus einem Mixer und einem Boiler, einem

./.

- 3 -

Durchlauferhitzer, einer thermisch regelbaren Mischbatterie od.dgl. bestehen, wobei dem Mixer der Mischvorrichtung eine wählbare Wassermenge mit einstellbarer Temperatur gleichzeitig mit der in dem Tränkeautomaten aufbereiteten Futtermittelmenge zugeführt werden sollte.

Zur Einbringung der in dem Tränkeautomaten aufbereiteten Futtermittelmenge in die Mischvorrichtungen ist es angebracht, zwischen diesen und dem Mixer des Tränkeautomaten jeweils eine Förderpumpe anzuordnen, die über ein Steuergerät mit dem Mixer des Tränkeautomaten derart gekoppelt sein sollte, daß diese erst nach Aufbereitung einer vorgegebenen Futtermittelmenge einschaltbar ist.

Nach einer andersartigen Ausgestaltung ist aber auch, um ein natürliches Gefälle zur Einbringung des in dem Tränkeautomaten aufbereiteten Futtermittels in die Mischvorrichtung zu erhalten, möglich, den Mixer des Tränkeautomaten vertikal über der bzw. den Mischvorrichtungen anzuordnen, wobei in die Verbindungsleitungen jeweils ein in Abhängigkeit von dem Betriebszustand der Mischvorrichtung und/oder des Tränkeautomaten betätigbares Absperrventil eingesetzt werden sollte.

Vorteilhaft ist es ferner, den Tränkeautomaten und die Mischvorrichtungen an ein Steuergerät anzuschließen, mittels dem die Mengen des dem Mixer des Tränkeautomaten zuzuführenden Futtermittels und des erwärmten Wassers sowie die Menge des in den Mixer der Mischvorrichtungen einzubringenden Wassers einstellbar sind. Auf diese Weise ist eine einfache Regelung gegeben. Die Temperatur des in den Boilern des Tränkeautomaten und den Mischvorrichtungen zu erwärmenden Wassers kann ohne Schwierigkeiten mittels Thermostaten geregelt werden.

Bei Verwendung von thermisch regelbaren Mischbatterien zur Erwärmung des dem Mixer des Tränkeautomaten und/oder der Mischvorrichtungen zuzuführenden Wassers ist es ferner angebracht, den Mischbatterien in den Wasserzuführungsleitungen eingesetzte Druckreduzierventile vorzuschalten und mit dem Steuergerät verbundene, vorzugsweise elektromagnetisch betätigbare Absperrventile nachzuschalten.

./.

_ 4_

Zum Ausgleich von Druckschwankungen des Wasserleitungsnetzes können der Tränkeautomat und/oder die Mischvorrichtungen des weiteren jeweils mit einem vorgeschalteten
Druckbehälter versehen oder gemeinsam an einen Druckbehälter angeschlossen sein oder in dessen Wasserzuführungsleitungen kann jeweils ein Druckbegrenzungsventil eingesetzt werden.

Mittels des gemäß der Erfindung ausgebildeten Tränkeautomaten
ist es auf einfache Weise möglich, pulverförmiges Futtermittel in einem auf 60 - 70$^{o}$C entsprechend dem Auflösungsvermögen erhitztem Wasser vollständig und in kurzer Zeit
aufzulösen, den Tieren das flüssige Futtermittel aber in
einer trinkbaren Temperatur von ca. 40$^{o}$C zur Verfügung zu
stellen. Wird nämlich dem Mixer des Tränkeautomaten das
erwärmte Wasser mit einer Temperatur von ca. 60 - 70$^{o}$C
in einer reduzierten Menge zugeführt und ist dem Mixer
eine Mischvorrichtung nachgeschaltet, so kann in dieser
ohne Schwierigkeiten das aufbereitete Futtermittel auf
ca. 40$^{o}$C kurzfristig abgekühlt und verdünnt werden, so
daß dieses den Tieren in der jeweils gewünschten Konzentration und in einer trinkfertigen Temperatur angeboten
werden kann. Eine unvollständige Auflösung des Pulvers
ist somit zuverlässig ausgeschlossen, auch erfolgt aufgrund der hohen Wassertemperatur in dem Mixer des Tränkeautomaten eine raschere Auflösung als bisher. Und da die
jeweiligen Temperaturen und Wassermengen leicht einzustellen sind, ist eine einfache Bedienbarkeit gegeben.

In der Zeichnung ist ein Ausführungsbeispiel des gemäß
der Erfindung ausgebildeten Tränkeautomaten für Säugetiere dargestellt, das nachfolgend im einzelnen erläutert
ist. Hierbei zeigt:

    Fig. 1   den Tränkeautomaten mit einer zwischen diesem und einer Saugstelle angeordneten Misch-
           vorrichtung       und

- 5 -

Fig. 2   den Tränkeautomaten mit Mischvorrichtung
nach Fig. 1 mit deren Mixern vorgeschalteten
Mischbatterien zur Regelung des diesen zuzuführenden warmen Wassers.

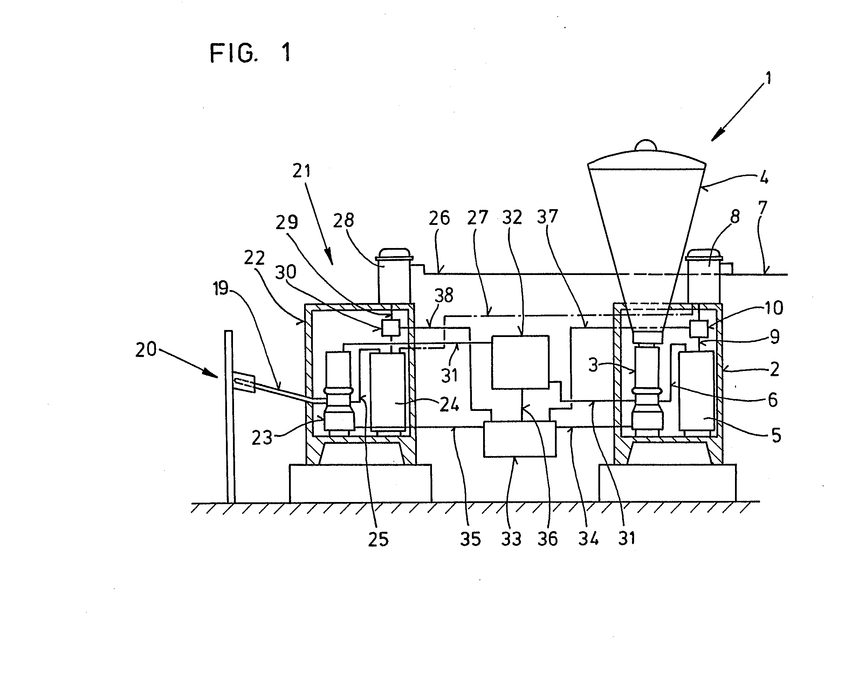

Der in Fig. 1 mit 1 bezeichnete Tränkeautomat dient zur Aufbereitung eines flüssigen Futtermittels und besteht im wesentlichen aus einem in einem Gehäuse 2 eingesetzten Mixer 3, auf
den ein Vorratsbehälter 4 für das den Mixer dosiert zuzuführende Pulver aufgesetzt ist, sowie einem Warmwasserboiler 5,
aus dem über eine Leitung 6 eine wählbare Menge erwärmten Wassers in den Mixer 3 einführbar ist. Um Druckschwankungen in
der Wasserzuleitung 7 auszugleichen, ist über dem Boiler 6
ein an die Wasserleitung 7 angeschlossener mit einem Schwimmer versehener Druckbehälter 8 angeordnet, der über eine
Leitung 9 mit dem Boiler 5 verbunden ist. In die Leitung 9
ist hierbei ein beispielsweise magnetisch betätigbares Absperrventil 1o eingesetzt, das über eine Steuerleitung 37
an ein Steuergerät 33 angeschlossen ist. Über eine weitere
Steuerleitung 34 ist auch der Mixer 3 mit dem Steuergerät
33 verbunden, so daß durch dieses aus dem Druckbehälter 8
durch kurzzeitiges Öffnen des Ventils 1o dem Boiler 5
eine bestimmte Menge kalten Wassers zuführbar ist, das als
erwärmtes Wasser in den Mixer 3 überströmt, dieser gleichzeitig auch einschaltbar ist, um die aus dem Vorratsbehälter 4 dosiert zugegebene Pulvermenge aufzubereiten.

Das Wasser wird in dem Boiler 5 hierbei auf eine Temperatur
von ca. 6o - 7o°C erhitzt, und zwar je nach dem Auflösungsvermögen des dem Mixer 3 zuzugebenden Pulvers, so daß eine
vollständige Auflösung in kurzer Zeit gewährleistet ist.
Auch weist das in dem Mixer 3 aufbereitete Futtermittel eine
höhere Konzentration als üblich auf. Zur Regelung der Wassertemperatur sind in dem Boiler 5 Thermostate vorgesehen,
die nicht dargestellt sind.

./.

- 6 -

Um jedoch den Tieren an der Saugstelle 2o das Futtermittel mit einer trinkbaren Temperatur und in der jeweils gewünschten Konzentration anbieten zu können, ist dem Mixer 3 eine Mischvorrichtung 21 nachgeschaltet, die ebenfalls aus einem in einem Gehäuse 22 eingebautem Mixer 23 und einem an diesen angeschlossenen Boiler 24 besteht. Oberhalb des Boilers 24 ist wiederum ein Druckbehälter 28 angeordnet, der über eine Leitung 26 mit der Leitung 7 verbunden ist; es ist aber auch, wie dies strichpunktiert eingezeichnet ist, möglich, den Boiler 24 über eine mit einem ebenfalls nicht dargestellten Absperrventil versehene Leitung 27 an den Druckbehälter 8 des Tränkeautomaten 1 anzuschliessen. Der Druckbehälter 28 steht in gleicher Weise wie der Druckbehälter 8 über eine Leitung 29, in die ein über eine Steuerleitung 38 an das Steuergerät 33 angeschlossenes Absperrventil 3o eingesetzt ist, mit dem Boiler 24 und dieser mittels einer Überlaufleitung 25 mit dem Mixer 23 in Verbindung.

Zur Einbringung des in den Mixer 3 des Tränkeautomaten 1 aufbereiteten Futtermittels in den Mixer 23 der Mischvorrichtung 21 ist in eine diese verbindende Leitung 31 eine Förderpumpe 32 eingesetzt, die über eine weitere Steuerleitung 36 an das Steuergerät 32 angeschlossen ist. Auch der Mixer 23 der Mischvorrichtung 21, aus dem das dort aufbereitete Futtermittel über eine Saugleitung 19 der Saugstelle 2o zuführbar ist, ist über eine Steuerleitung 35 mit dem Steuergerät 33 verbunden.

Dem in dem Tränkeautomaten 1 bei einer Wassertemperatur von ca. 6o - 7o°C aufbereiteten Futtermittel wird in der Mischvorrichtung 21, sobald dieses mittels der Förderpumpe 32 in den Mixer 23 gepumpt ist, eine bestimmte Menge z.B. in dem Boiler 24 auf Raumtemperatur erwärmten Wassers zugegeben, so daß das über die Saugleitung 12 von

./.

den Tieren abzusaugende Futtermittel eine trinkfertige Temperatur von ca. 4o$^{\circ}$C aufweist. Die Menge des zuzugebenden Wassers wie auch dessen Temperatur werden hierbei auf die jeweiligen Gegebenheiten eingestellt, wobei die Regelung der Wassertemperatur in dem Boiler 24 wiederum mittels nicht dargestellter Thermostate vorgenommen wird. Selbstverständlich wird durch die Zugabe des kühleren Wassers auch die Konzentration des Futtermittels beeinflußt, das in dem Mixer 3 des Tränkeautomaten 1 mit höherer Konzentration angerührte Futtermittel wird somit auf eine für die Tiere verträgliche Konzentration gebracht. Und da die Förderpumpe 32 mit Hilfe des Steuergerätes 33 erst selbsttätig einschaltet, wenn ein Mischvorgang in dem Mixer 3 beendet ist, wird somit das diesem zugegebene Futtermittel in dem auf 6o - 7o$^{\circ}$C erhitzten Wasser vollständig gelöst und erst dann in der Mischvorrichtung 21 auf eine trinkfertige Temperatur abgekühlt.

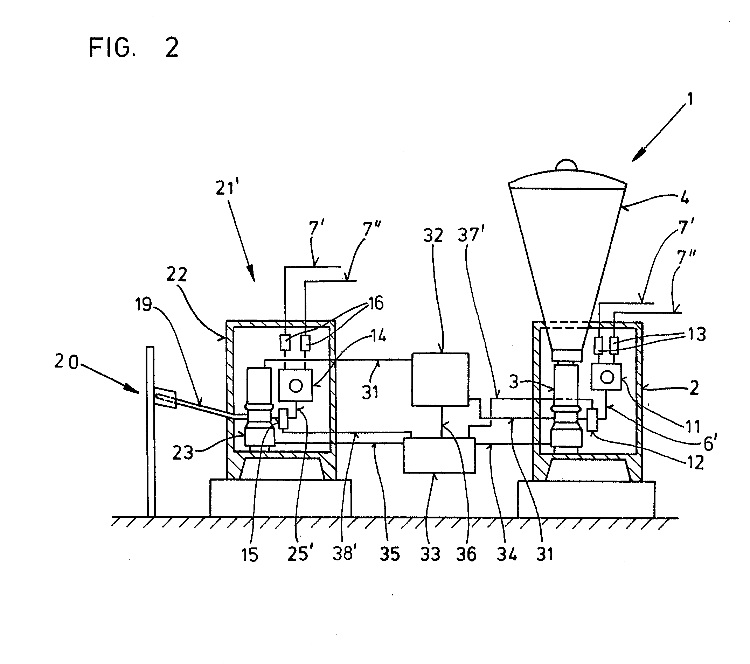

Bei dem Tränkeautomaten 1' nach Fig. 2, der in gleicher Weise ausgebildet ist wie der Tränkeautomat 1, ist zur Regelung des dem Mixer 3 zuzuführenden warmen Wassers eine thermisch regelbare Mischbatterie 11 vorgesehen, mittels der die Temperatur des über die Leitung 6' in den Mixer 3 einströmenden warmen Wassers auf einer einstellbaren Temperatur konstant zu halten ist. Der Mischbatterie 11 wird hierbei das Wasser aus einer Kaltwasserleitung 7' und einer Warmwasserleitung 7'' zugeführt, in die, um Druckschwankungen auszugleichen, jeweils ein Druckreduzierventil 13 eingesetzt sind. Zur Mengenregelung des in den Mixer 3 einzubringenden warmen Wassers dient ein z.B. elektromagnetisch betätigbares Absperrventil 12, das in die Leitung 6' eingesetzt und über eine Steuerleitung 37' mit dem Steuergerät 33 verbunden ist.

./.

Auch die Mischvorrichtung 21' ist mit einer Mischbatterie 14 ausgestattet, der das in den Mixer 23 über eine Leitung 25' einzugebende warme Wasser wiederum aus einer Kaltwasserleitung 7' und einer Warmwasserleitung 7'' zuströmt und in dieser somit aus Kalt- und Warmwasser gemischt wird. In die Wasserleitungen 7' und 7'' sind ebenfalls Druckreduzierventile 16 eingesetzt, außerdem ist in der Leitung 25' ein Absperrventil 15 angeordnet, mittels dem die Menge des zuzugebenden Wassers, da das Absperrventil 15 über eine Steuerleitung 38' mit dem Steuergerät 33 in Verbindung steht, einzustellen ist.

A 2603  e-s
5. April 1983

·ℐ

## DIPL.-ING. GUIDO ENGELHARDT PATENTANWALT

**7990 Friedrichshafen**

Martin Förster
77o7 Engen

Patentansprüche:

1. Tränkeautomat für Säugetiere, insbesondere für Kälber, bestehend aus einem Mixer zur Zubereitung eines flüssigen Futtermittels, beispielsweise von Milch, das in diesem aus einem aufgesetzten Behälter dosiert zugeführten Pulver und erwärmten Wasser gemischt wird und einer Saugstelle zuführbar ist,

d a d u r c h   g e k e n n z e i c h n e t ,

daß dem Mixer (3) des Tränkeautomaten (1) das erwärmte Wasser aus einem Boiler (5), einem Durchlauferhitzer, einer thermisch regelbaren Mischbatterie (11) od.dgl. mit einer dem Auflösungsvermögen des Pulvers entsprechenden Temperatur von ca. 6o - 7o°C in einer gegenüber der aufzubereitenden Futtermittelkonzentration reduzierten Menge zuführbar ist und daß dem Mixer (3) des Tränkeautomaten (1) eine oder mehrere wechselweise einschaltbare und jeweils über eine

./.

- 2 -

Saugleitung (19) mit einer Saugstelle (2o) verbundenen Mischvorrichtungen (21) nachgeschaltet sind, in denen durch Zugabe von Wasser das in dem Tränkeautomaten (1) aufbereitete Futtermittel auf eine trinkfertige Temperatur von ca. 4o°C abkühlbar und/oder auf die jeweilige Konzentration einstellbar ist.

2. Tränkeautomat nach Anspruch 1,

d a d u r c h   g e k e n n z e i c h n e t ,

daß die Mischvorrichtungen (21) jeweils aus einem Mixer (23) und einem Boiler (24), einem Durchlauferhitzer, einer thermisch regelbaren Mischbatterie (14 od.dgl. bestehen und daß dem Mixer (23) der Mischvorrichtung (21) eine wählbare Wassermenge mit einstellbarer Temperatur gleichzeitig mit der in dem Tränkeautomaten (1) aufbereiteten Futtermittelmengen zuführbar ist.

3. Tränkeautomat nach Anspruch 1 oder 2,

d a d u r c h   g e k e n n z e i c h n e t ,

daß zur Einbringung der in dem Tränkeautomaten (1) aufbereiteten Futtermittelmenge in die Mischvorrichtungen (21) zwischen diesen und dem Mixer (3) des Tränkeautomaten (1) jeweils eine Förderpumpe (32) angeordnet ist.

4. Tränkeautomat nach Anspruch 3,

d a d u r c h   g e k e n n z e i c h n e t ,

daß die Förderpumpe (32) über ein Steuergerät (33) mit dem Mixer (3) des Tränkeautomaten (1) derart gekoppelt ist, daß diese erst nach Aufbereitung einer vorgegebenen Futtermittelmenge einschaltbar ist.

5. Tränkeautomat nach Anspruch 1 oder 2,

d a d u r c h   g e k e n n z e i c h n e t ,

daß der Mixer (3) des Tränkeautomaten (1) vertikal über
der bzw. den Mischvorrichtungen (21) angeordnet ist und
daß in die Verbindungsleitungen jeweils ein in Abhängigkeit von dem Betriebszustand der Mischvorrichtung (21)
und/oder des Tränkeautomaten (1) betätigbares Absperrventil eingesetzt ist.

6. Tränkeautomat nach einem oder mehreren der
Ansprüche 1 bis 5,

d a d u r c h   g e k e n n z e i c h n e t ,

daß der Tränkeautomat (1) und die Mischvorrichtungen (21)
an ein Steuergerät (33) angeschlossen sind, mittels dem
die Mengen des dem Mixer (3) des Tränkeautomaten (1) zuzuführenden Futtermittels und des erwärmten Wassers (Ventil 1o) sowie die Menge des in den Mixer (23) der Mischvorrichtungen (21) einzubringenden Wassers (Ventil 3o)
einstellbar sind.

7. Tränkeautomat nach Anspruch 6,

d a d u r c h   g e k e n n z e i c h n e t ,

daß die Temperatur des in den Boilern (5, 24) des Tränkeautomaten (1) und den Mischvorrichtungen (21) zu erwärmenden Wassers mittels Thermostaten regelbar ist.

./.

- ' 13 =

8. Tränkeautomat nach einem oder mehreren der Ansprüche 1 bis 6,

d a d u r c h   g e k e n n z e i c h n e t ,

daß bei Verwendung von thermisch regelbaren Mischbatterien (11 bzw. 14) zur Erwärmung des dem Mixer (3 bzw. 23) des Tränkeautomaten (1') und/oder der Mischvorrichtung (21') zuzuführenden Wassers diesen in den Wasserzu - führungsleitungen (7', 7'') eingesetzte Druckreduzierventile (13 bzw. 16) vorgeschaltet und mit dem Steuergerät (33) verbundene, vorzugsweise elektromagnetisch betätigbare Absperrventile (12 bzw. 15) nachgeschaltet sind.

9. Tränkeautomat nach einem oder mehreren der Ansprüche 1 bis 7,

d a d u r c h   g e k e n n z e i c h n e t ,

daß der Tränkeautomat (1) und/oder die Mischvorrichtungen (21) zum Ausgleich von Druckschwankungen des Wasserleitungsnetzes jeweils mit einem vorgeschalteten Druckbehälter (8, 28) versehen oder gemeinsam an einen Druckbehälter (8) angeschlossen sind oder daß in dessen Wasserzuführungsleitungen jeweils ein Druckbegrenzungsventil eingesetzt ist.

A 26o3 e-s
5. April 1983

FIG. 1

FIG. 2